(19)

Europäisches
Patentamt
European
Patent Office
Office européen
des brevets

(11) **EP 4 079 896 A2**

(12) **EUROPEAN PATENT APPLICATION**
published in accordance with Art. 153(4) EPC

(43) Date of publication:
**26.10.2022 Bulletin 2022/43**

(21) Application number: **20903943.7**

(22) Date of filing: **09.12.2020**

(51) International Patent Classification (IPC):
*C22C 38/02* (2006.01)    *C22C 38/04* (2006.01)
*C22C 38/14* (2006.01)    *C22C 38/00* (2006.01)
*C22C 38/60* (2006.01)    *C21D 8/12* (2006.01)
*C22C 38/12* (2006.01)    *C22C 38/40* (2006.01)
*B21B 3/00* (2006.01)

(52) Cooperative Patent Classification (CPC):
**C22C 38/02**

(86) International application number:
**PCT/KR2020/017975**

(87) International publication number:
**WO 2021/125682 (24.06.2021 Gazette 2021/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.12.2019 KR 20190171450**

(71) Applicant: **POSCO**
**Pohang-si, Gyeongsangbuk-do 37859 (KR)**

(72) Inventors:
• **LEE, Hunju**
  **Pohang-si, Gyeongsangbuk-do 37859 (KR)**
• **LEE, Seung-Gon**
  **Pohang-si Gyeongsangbuk-do 37859 (KR)**

(74) Representative: **Zech, Stefan Markus**
  **Meissner Bolte Patentanwälte**
  **Rechtsanwälte Partnerschaft mbB**
  **Postfach 86 06 24**
  **81633 München (DE)**

(54) **NON-ORIENTED ELECTRICAL STEEL SHEET, AND METHOD FOR MANUFACTURING SAME**

(57)    A non-oriented electrical steel sheet according to an exemplary embodiment of the present invention includes, in wt%, Si: 1.5 to 4.0 %, Al: 0.5 to 1.5 %, Mn: 0.05 to 0.55 %, C: 0.005 % or less, Ti: 0.004 % or less (excluding 0 %), N: 0.005 % or less (excluding 0 %), S: 0.005 % or less (excluding 0 %), and Cu: 0.01% or less (excluding 0 %), and the balance of Fe and inevitable impurities, and satisfies Formula 1 and Formula 2 below.

[Formula 1]

$$[N] \leq 0.005 \times ([Al]+[Ti])$$

[Formula 2]

$$[S] \leq 0.01 \times ([Mn]+[Cu])$$

(In Formula 1 and Formula 2, [N], [Al], [Ti], [S], [Mn], and [Cu] represent a content (wt%) of N, Al, Ti, S, Mn, and Cu, respectively).

FIG. 1

EP 4 079 896 A2

## Description

**[Technical Field]**

An embodiment of the present invention relates to a non-oriented electrical steel sheet and a manufacturing method thereof. Specifically, it relates to a non-oriented electrical steel sheet and a manufacturing method thereof that may improve magnetism by appropriately controlling a relationship between Al, Mn, Cu, Ti, S, and N and suppressing formation of a base material surface layer of AlN precipitates.

**[Background Art]**

A non-oriented electrical steel sheet is mainly used in a motor that converts electrical energy to mechanical energy, and an excellent magnetic characteristic of the non-directional electrical steel sheet is required to achieve high efficiency while the motor converts the electrical energy to the mechanical energy. Recently, as environmentally-friendly technology has been highlighted, it is very important to increase efficiency of the motor using about half of the total electrical energy, and for this, demand for non-directional electrical steel with an excellent magnetic characteristic also increases. The magnetic characteristic of the non-oriented electrical steel is mainly evaluated by iron loss and magnetic flux density. The iron loss means energy loss occurring at a specific magnetic flux density and frequency, and the magnetic flux density means a degree of magnetization obtained in a specific magnetic field. As the core loss decreases, the more energy efficient motor may be manufactured in the same condition, and as the magnetic flux density is higher, it is possible to downsize the motor and to reduce copper loss, thus it is important to manufacture the non-oriented electrical steel sheet having low iron loss and high magnetic flux density. Depending on operational conditions of the motor, the characteristics of the non-oriented electrical steel sheet that should be considered are also varied. As a reference for determining the characteristic of the non-oriented electrical steel sheet used in the motor, many motors regard $W_{15/50}$, which is iron loss when a magnetic field of 1.5 T is applied at a commercial frequency of 50 Hz, as the most important value. However, not all motors used for various purposes value the iron loss of $W_{15/50}$ as the most important, and they also estimate iron loss at other frequencies or applied magnetic fields according to a main operational condition. Particularly, in the non-oriented electrical steel sheet having a thickness of 0.35 mm or less that is recently used in a motor for driving an electric car, there are many cases in which the magnetic characteristic is important in a low magnetic field of 1.0 T or less and a high frequency of 400 Hz or more, so the characteristic of the non-oriented electrical steel sheet is estimated with an iron loss such as $W_{10/400}$. A typically used method for increasing the magnetic properties of the non-oriented electrical steel sheet is to add an alloying element such as Si. The addition of the alloying element can increase specific resistance of the steel, and as the specific resistance is higher, eddy current loss decreases, thereby reducing the total iron loss. On the contrary, as the content of Si increases, the magnetic flux density is deteriorated and brittleness increases, and when more than a predetermined amount thereof is added, it may not be cold rolled and may not be able to be commercially produced. Particularly, the electrical steel sheet may obtain the effect of reducing the iron loss as it becomes thinner, but the deterioration of rolling by the brittleness is a serious problem. On the other hand, there has been an attempt to add elements such as Al and Mn in addition to Si to further increase the specific resistance of the steel. For the non-oriented electrical steel sheet used for the motor for driving the electric vehicle, high-frequency iron loss of 400 Hz or higher is important, and in this case, the higher the frequency, the higher a ratio of eddy current loss to iron loss, so that it is advantageous to increase specific resistance thereof and decrease a thickness thereof. However, as described above, as the amount of added elements increases in order to increase the specific resistance, since the rollability decreases, when the specific resistance is increased and the thickness is decreased, the rolling and continuous annealing productivity is inevitably decreased. To improve this, studies have been conducted, such as by adding specific elements or raising the rolling temperature, but it has not been applied to commercial production due to an increase in process cost and lack of effectiveness. As in a driving motor for an electric vehicle, when an operating frequency increases, a phenomenon in which a current is concentrated on a surface of the steel sheet due to the skin effect occurs. Therefore, in order to improve the high-frequency characteristic, the characteristic of the surface portion of the steel sheet has a very important influence. Research on Si deposition and diffusion and research on improvement of surface roughness through physicochemical methods to improve surface specific resistance have been conducted, but they are difficult to implement through existing process facilities, and the effects thereof are small or the manufacturing costs therefor are significantly increased, so the fields of application thereof are very limited.

**[Disclosure]**

**[Description of the Drawings]**

[Technical Problem]

An embodiment of the present invention provides a non-oriented electrical steel sheet and a manufacturing method thereof. Specifically, it provides a non-oriented electrical steel sheet and a manufacturing method thereof that may improve magnetism by appropriately controlling a relationship between Al, Mn, Cu, Ti, S, and N and suppressing formation of AlN precipitates.

[Technical Solution]

An embodiment of the present invention provides a non-oriented electrical steel sheet, including, in wt%, Si: 1.5 to 4.0 %, Al: 0.5 to 1.5 %, Mn: 0.05 to 0.55 %, C: 0.005 % or less, Ti: 0.004 % or less (excluding 0 %), N: 0.005 % or less (excluding 0 %), S: 0.005 % or less (excluding 0 %), and Cu: 0.01% or less (excluding 0 %), and the balance of Fe and inevitable impurities; and satisfying Formula 1 and Formula 2 below.

$$[\text{Formula 1}]$$

$$[N] \le 0.005 \times ([Al]+[Ti])$$

$$[\text{Formula 2}]$$

$$[S] \le 0.01 \times ([Mn]+[Cu])$$

(In Formula 1 and Formula 2, [N], [Al], [Ti], [S], [Mn], and [Cu] represent a content (wt%) of N, Al, Ti, S, Mn, and Cu, respectively).

The non-oriented electrical steel sheet includes an oxide layer in an inner direction from a surface thereof, wherein the oxide layer includes 50 wt% or more of Al, and a thickness of the oxide layer is 10 to 50 nm.

One or more of Nb and V may be further included in an amount of 0.004 wt% or less, respectively.

One or more of Cr and Ni may be further included in an amount of 0.05 wt% or less, respectively.

One or more of Sn and Sb may be further included in an amount of 0.1 wt% or less, respectively.

The non-oriented electrical steel sheet may further include one or more of P: 0.02 wt% or less, B: 0.002 wt% or less, Mg: 0.005 wt% or less, and Zr: 0.005 wt% or less.

The number of AlN precipitates having a diameter of 100 nm or less in a cross-section from a surface to a depth of 20 $\mu$m may be 0.1 pieces/mm$^2$ or less.

An average grain size may be 50 to 100 $\mu$m.

Another embodiment of the present invention provides a manufacturing method of a non-oriented electrical steel sheet, including: hot-rolling a slab including, in wt%, Si: 1.5 to 4.0 %, Al: 0.5 to 1.5 %, Mn: 0.05 to 0.55 %, C: 0.005 % or less, Ti: 0.004 % or less (excluding 0 %), N: 0.005 % or less (excluding 0 %), S: 0.005 % or less (excluding 0 %), and Cu: 0.01% or less (excluding 0 %), and the balance of Fe and inevitable impurities, and satisfying Formula 1 and Formula 2 below to manufacture a hot-rolled sheet; cold-rolling the hot-rolled sheet to manufacture a cold-rolled sheet; final-annealing the cold-rolled sheet; and cooling the final-annealed cold-rolled sheet, wherein in the cooling the final-annealed cold-rolled sheet, an exposure time to an atmosphere having a dew point exceeding 0 °C at a temperature of 700 °C or less may be 5 to 20 seconds.

$$[\text{Formula 1}]$$

$$[N] \le 0.005 \times ([Al]+[Ti])$$

$$[\text{Formula 2}]$$

$$[S] \le 0.01 \times ([Mn]+[Cu])$$

(In Formula 1 and Formula 2, [N], [Al], [Ti], [S], [Mn], and [Cu] represent a content (wt%) of N, Al, Ti, S, Mn, and Cu, respectively).

The manufacturing method of the non-oriented electrical steel sheet may further include heating the slab at a temperature of 1200 °C or less before the manufacturing of the hot-rolled sheet.

In the hot-rolling, a finish rolling temperature may be 800 °C or higher.

The manufacturing method of the non-oriented electrical steel sheet may further include annealing the hot-rolled sheet in a range of 850 to 1150 °C after the hot-rolling.

The final-annealing may be performed in a non-oxidizing atmosphere at a temperature of 700 to 1050 °C for 50 to 90 seconds.

The non-oxidizing atmosphere may be an atmosphere including 5 vol% or more of $H_2$ and having a dew point of 0 °C or less.

[Advantageous Effects]

According to the embodiment of the present invention, by suggesting an optimal alloy composition of a non-oriented electrical steel sheet and a cooling condition after annealing, it is possible to form a dense Al-based oxide layer on a surface of the electrical steel sheet to suppress formation of fine AlN precipitates.

In addition, according to the embodiment of the present invention, it is possible to improve efficiency of a motor and a generator by using a non-oriented electrical steel sheet with excellent magnetism.

## BRIEF DESCRIPTION OF THE DRAWING

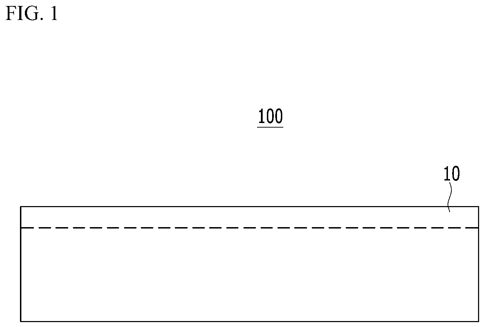

FIG. 1 illustrates a schematic view of a cross-section of a non-oriented electrical steel sheet according to an embodiment of the present invention.

## [Mode for Invention]

It will be understood that, although the terms first, second, third, etc. may be used herein to describe various elements, components, regions, areas, zones, layers, and/or sections, they are not limited thereto. These terms are only used to distinguish one element, component, region, area, zone, layer, or section from another element, component, region, layer, or section. Therefore, a first part, component, region, area, zone, layer, or section to be described below may be referred to as second part, component, area, layer, or section within the range of the present invention.

Therefore, a first part, component, region, area, zone, layer, or section to be described below may be referred to as second part, component, area, layer, or section within the range of the present invention. An expression used in the singular encompasses an expression of the plural, unless it has a clearly different meaning in the context. In the specification, it is to be understood that the terms such as "including", "having", etc., are intended to indicate the existence of specific features, regions, numbers, stages, operations, elements, components, and/or combinations thereof disclosed in the specification, and are not intended to preclude the possibility that one or more other features, regions, numbers, stages, operations, elements, components, and/or combinations thereof may exist or may be added.

When referring to a part as being "on" or "above" another part, it may be positioned directly on or above the other part, or another part may be interposed therebetween. In contrast, when referring to a part being "directly above" another part, no other part is interposed therebetween.

Unless otherwise stated, % means wt%, and 1 ppm is 0.0001 wt%.

In embodiments of the present invention, inclusion of an additional element means replacing the balance of iron (Fe) by an additional amount of the additional elements.

Unless otherwise defined, all terms used herein, including technical or scientific terms, have the same meanings as those generally understood by those with ordinary knowledge in the field of art to which the present invention belongs. Terms defined in commonly used dictionaries are further interpreted as having meanings consistent with the relevant technical literature and the present disclosure, and are not to be construed as having idealized or very formal meanings unless defined otherwise.

The present invention will be described more fully hereinafter with reference to the accompanying drawings, in which embodiments of the invention are shown. As those skilled in the art would realize, the described embodiments may be modified in various different ways, all without departing from the spirit or scope of the present invention.

A non-oriented electrical steel sheet according to an exemplary embodiment of the present invention includes, in wt%, Si: 1.5 to 4.0 % Al: 0.5 to 1.5 %, Mn: 0.05 to 0.55 %, C: 0.005 % or less, Ti: 0.004 % or less (excluding 0 %), N: 0.005 % or less (excluding 0 %), S: 0.005 % or less (excluding 0 %), and Cu: 0.01% or less (excluding 0 %), and the balance of Fe and inevitable impurities, and satisfies Formula 1 and Formula 2 below.

[Formula 1]

$$[N] \leq 0.005 \times ([Al]+[Ti])$$

[Formula 2]

$$[S] \leq 0.01 \times ([Mn]+[Cu])$$

(In Formula 1 and Formula 2, [N], [Al], [Ti], [S], [Mn], and [Cu] represent a content (wt%) of N, Al, Ti, S, Mn, and Cu, respectively).

Hereinafter, the reason for limiting the components of the non-oriented electrical steel sheet will be described.

Si: 1.5 to 4.0 wt%

Silicon (Si) is a major element added to reduce eddy current loss of iron loss by increasing specific resistance of steel. When too little Si is added, iron loss is deteriorated. Conversely, when too much Si is added, a magnetic flux density is largely reduced, and a problem may occur in processability. Accordingly, Si may be included in the above-mentioned range. Specifically, Si may be included in an amount of 2.0 to 3.9 wt%. More specifically, Si may be included in an amount of 3.0 to 3.5 wt%.

Al: 0.5 to 1.5 wt%

Aluminum (Al) importantly serves to reduce iron loss by increasing specific resistance along with Si, and also serves to reduce magnetic anisotropy to reduce magnetic deviation in a rolling direction and a transverse direction. When too little Al is added, it may be difficult to obtain a magnetic improvement effect because fine nitrides are formed or a surface oxide layer is not densely formed. When too much Al is added, nitrides may be excessively formed, which may deteriorate magnetism, and may cause problems in process steps such as steelmaking and continuous casting. Accordingly, Al may be included in the above-mentioned range. Specifically, Al may be contained in an amount of 0.5 to 1.0 wt%.

Mn: 0.05 to 0.55 wt%

Manganese (Mn) improves the iron loss by increasing the specific resistance of the material and serves to form a sulfide. When too little Mn is added, sulfides may be finely formed to cause magnetic deterioration. Conversely, when too much Mn is added, MnS is excessively precipitated, and formation of a {111} texture unfavorable to magnetism is promoted, so that the magnetic flux density may rapidly decrease. Specifically, Mn may be included in an amount of 0.05 to 0.50 wt%.

C: 0.005 wt% or less

Since carbon (C) causes magnetic aging and combines with other impurity elements to form carbides to reduce magnetic characteristics, the smaller it is, the more preferable it is, and it may be managed at 0.005 wt% or less, more preferably, at 0.003 wt% or less.

Ti: 0.004 wt% or leas

Titanium (Ti) is an element that has a very strong tendency to form precipitates in the steel, and form fine carbides, nitrides, or sulfides inside the base metal to inhibit grain growth, thereby deteriorating iron loss. Accordingly, a content of Ti may be managed to be 0.004 wt% or less, more specifically, 0.002 wt% or less.

N: 0.005 wt% or less

Nitrogen (N) not only forms fine AlN precipitates inside the base material, but also forms fine precipitates by combining with other impurities to suppress grain growth and worsen iron loss, so that the less it is included, the better. Accordingly, a content of N may be managed to be 0.005 wt% or less, more specifically, 0.003 wt% or less.

N may satisfy Formula 1 below in relation to Al and Ti.

## [Formula 1]

$$[N] \leq 0.005 \times ([Al] + [Ti])$$

(In Formula 1, [N], [Al], and [Ti] represent a content (wt%) of N, Al, and Ti, respectively).

By managing it to be 0.005 times or less of a sum of contents of Al and Ti, which promote nitride formation, formation of fine precipitates may be prevented.

S: 0.005 wt% or leas

Sulfur (S) forms MnS and CuS that are fine precipitates to deteriorate magnetic properties and deteriorate hot workability, so it is desirable to manage it to be a small amount. Accordingly, a content of S may be managed to be 0.005 wt% or less, more specifically, 0.003 wt% or less.

S may satisfy Formula 2 below in relation to Mn and Cu.

## [Formula 2]

$$[S] \leq 0.01 \times ([Mn] + [Cu])$$

(In Formula 2, [S], [Mn], and [Cu] represent a content (wt%) of S, Mn, and Cu, respectively).

By managing it to be 0.01 times or less of a sum of contents of Mn and Cu, which promote sulfide formation, formation of fine precipitates may be prevented.

Cu: 0.01 wt% or less

Copper (Cu) forms fine sulfides, which deteriorate magnetic characteristics and deteriorate hot workability, so that it is desirable to manage it less. As it is an element that is indispensable in steel, it may be managed at 0.01 wt% or less. Specifically, Cu may be included in an amount of 0.001 to 0.01 wt%.

One or more of Nb and V may be further included in an amount of 0.004 wt% or less, respectively.

Niobium (Nb) and vanadium (V) are elements that have a very strong tendency to form precipitates in the steel, and form fine carbides, nitrides, or sulfides inside the base metal to inhibit grain growth, thereby deteriorating iron loss. Accordingly, each of Nb and V may be managed to be 0.004 wt% or less, more specifically, 0.003 wt% or less.

One or more of Cr and Ni may be further included in an amount of 0.05 wt% or less, respectively.

Chromium (Cr) and nickel (Ni) do not have a strong tendency to form fine precipitates, but they may form Cr-based carbides to deteriorate magnetism or interfere with formation of an Al-based oxide layer on the surface, so that each of them may be managed at 0.05 wt% or less. Specifically, each of them may be included in an amount of 0.01 to 0.05 wt%.

One or more of Sn and Sb may be further included in an amount of 0.1 wt% or less, respectively.

Tin (Sn) and antimony (Sb) are segregated at the surface and grain boundaries of the steel to form texture favorable to magnetism by suppressing development of an initial {111} orientation of recrystallization, but may deteriorate workability and surface quality, so that each of them may be managed at 0.1 wt% or less. Specifically, each of them may be included in an amount of 0.01 to 0.1 wt%.

In addition to the above-described elements, inevitably mixed impurities such as phosphorus (P), boron (B), magnesium (Mg), and zirconium (Zr) may be included. Although these elements are present in trace amounts, they may cause magnetic deterioration due to the formation of inclusions in the steel, so that P: 0.02 % or less, B: 0.002 % or less, Mg: 0.005 % or less, and Zr: 0.005 % or less should be managed.

The balance of Fe, and inevitable impurities are included. The inevitable impurities are impurities mixed in the steel-making and the manufacturing process of the grain-oriented electrical steel sheet, which are widely known in the field, and thus a detailed description thereof will be omitted. In the embodiment of the present invention, the addition of elements other than the above-described alloy components is not excluded, and various elements may be included within a range that does not hinder the technical concept of the present invention. When the additional elements are further included, they replace the balance of Fe.

As described above, in the embodiment of the present invention, by appropriately controlling the relationship between Al, Mn, Cu, Ti, S, and N, and forming an Al-based oxide layer, magnetism may be improved.

FIG. 1 illustrates a schematic view of a cross-section of a non-oriented electrical steel sheet according to an embodiment of the present invention.

As shown in FIG. 1, an oxide layer 10 is included in an inner direction from a surface of a non-oriented electrical steel sheet 100. The oxide layer 10 includes 50 wt% or more of Al, and a thickness of the oxide layer 10 is 10 to 50 nm.

The oxide layer 10 may be formed by allowing oxygen in the atmosphere to penetrate into the steel sheet in a cooling step after final annealing, which will be described later.

The oxide layer 10 may include 25 wt% or more of oxygen (O).

Due to the surface concentration of Al, the oxide layer 10 may include 50 wt% or more of Al. Specifically, Al may be included in an amount of 50 to 60 wt%. Other than Al, The remaining alloy components are the same as the alloy components of the non-oriented electrical steel sheet described above. Since the thickness of the oxide layer 10 is very thin compared to that of the entire non-oriented electrical steel sheet 100, it has substantially no effect on the alloy composition of the non-oriented electrical steel sheet 100.

As described above, since Al is densely formed in the oxide layer 10, it suppresses the formation of AlN precipitates near the surface layer of the base material, and ultimately contributes to the improvement of the magnetism.

Al also has a concentration gradient in the oxide layer 10 like oxygen, and in the embodiment of the present invention, the content of Al in the oxide layer 10 means an average content of Al in the oxide layer 10.

The thickness of the oxide layer 10 may be 10 to 50 nm. When the thickness of the oxide layer 10 is too thin, Al concentration may not be properly made, and the AlN suppression effect described above may not be sufficiently achieved. When the thickness of the oxide layer 10 is too thick, a large amount of oxygen may penetrate into the steel sheet and the magnetism may be inferior. Specifically, the thickness of the oxide layer 10 may be 10 to 30 nm.

The oxide layer 10 may have a non-uniform thickness with respect to the entire surface of the non-oriented electrical steel sheet 10, and in the embodiment of the present invention, the thickness of the oxide layer 10 means an average thickness with respect to the entire surface.

As described above, AlN precipitate formation is suppressed due to the presence of the oxide layer 10. Specifically, the number of the AlN precipitates having a diameter of 100 nm or less in a cross-section from the surface to a depth of 20 $\mu$m may be 0.1 pieces/mm$^2$ or less. The diameter and number of the AlN precipitates are based on a cross-section cut parallel to the thickness direction of the steel sheet, that is, a surface (TD surface, RD surface, or the like) including the steel sheet thickness direction (ND direction).

The thickness of the steel sheet may be 0.1 to 0.3 mm. An average grain diameter may be 50 to 100 $\mu$m. When it has an appropriate thickness and the average grain diameter, the magnetism may be improved. The average grain diameter may be calculated by (measured area ÷ number of grains)^0.5. It is based on a plane parallel to the rolling plane (ND plane).

As described above, in the embodiment of the present invention, by appropriately controlling the relationship between Al, Mn, Cu, Ti, S, and N, and forming an Al-based oxide layer, the magnetism may be improved. Specifically, based on the thickness of 0.27 mm, the iron loss ($W_{15/50}$) of the non-oriented electrical steel sheet may be 1.9 W/Kg or less, the iron loss ($W_{10/400}$) thereof may be 12.5 W/kg or less, and the magnetic flux density ($B_{50}$) thereof may be 1.67 T or more. The iron loss ($W_{15/50}$) is iron loss when a magnetic flux density of 1.5 T is induced at a frequency of 50 Hz. The iron loss ($W_{10/400}$) is iron loss when a magnetic flux density of 1.0 T is induced at a frequency of 400 Hz. The magnetic flux density ($B_{50}$) is magnetic flux density induced in a magnetic field of 5000 A/m. Specifically, the iron loss ($W_{15/50}$) of the non-oriented electrical steel sheet may be 1.9 W/Kg or less, the iron loss ($W_{10/400}$) thereof may be 12.0 W/kg or less, and the magnetic flux density ($B_{50}$) thereof may be 1.68 T or more.

A manufacturing method of a non-oriented electrical steel sheet according to an embodiment of the present invention includes: hot-rolling a slab to manufacture a hot-rolled sheet; cold-rolling the hot-rolled sheet to manufacture a cold-rolled sheet; final annealing the cold-rolled sheet; and cooling the final annealed cold-rolled sheet.

First, the slab is hot-rolled.

The alloy components of the slab have been described in the alloy components of the above-described non-oriented electrical steel sheet, so duplicate descriptions thereof will be omitted. Since the alloy compositions are not substantially changed during the manufacturing process of the non-oriented electrical steel sheet, the alloy compositions of the non-oriented electrical steel sheet and the slab are substantially the same.

Specifically, the slab may include, in wt%, Si: 1.5 to 4.0 % Al: 0.5 to 1.5 %, Mn: 0.05 to 0.55 %, C: 0.005 % or less, Ti: 0.004 % or less (excluding 0 %), N: 0.005 % or less (excluding 0 %), S: 0.005 % or less (excluding 0 %), and Cu: 0.01% or less (excluding 0 %), and the balance of Fe and inevitable impurities, and may satisfy Formula 1 and Formula 2 below.

[Formula 1]

$$[N] \leq 0.005 \times ([Al]+[Ti])$$

[Formula 2]

$$[S] \leq 0.01 \times ([Mn]+[Cu])$$

(In Formula 1 and Formula 2, [N], [Al], [Ti], [S], [Mn], and [Cu] represent a content (wt%) of N, Al, Ti, S, Mn, and Cu, respectively).

Other additional elements of the slab have been described in the alloy components of the non-oriented electrical steel sheet, so duplicate descriptions thereof will be omitted.

The slab may be heated before hot-rolling the slab. The heating temperature of the slab is not limited, but the slab may be heated at 1200 °C or less. When the slab heating temperature is too high, precipitates such as AlN and MnS present in the slab are re-dissolved and then finely precipitated during hot-rolling and annealing, thereby inhibiting grain growth and reducing magnetism.

The slab is hot-rolled to manufacture the hot-rolled sheet. A thickness of the hot-rolled sheet may be 2 to 2.3 mm. In the manufacturing of the hot-rolled sheet, a finish rolling temperature may be 800 °C or higher. Specifically, it may be 800 to 1000 °C. The hot-rolled sheet may be wound at temperatures of 700 °C or less.

After the manufacturing of the hot-rolled sheet, hot-rolled-sheet-annealing the hot-rolled sheet may be further included. In this case, a temperature of the hot-rolled-sheet-annealing may be 850 to 1150 °C. When the temperature of the hot-rolled-sheet-annealing is too low, the structure does not grow or finely grows, making it difficult to obtain a magnetically beneficial texture during the annealing after the cold rolling. When the annealing temperature is too high, magnetic grains may excessively grow, and surface defects of the sheet may become excessive. The hot-rolled sheet annealing is performed in order to increase the orientation favorable to magnetism as required, and it may be omitted. The annealed hot-rolled sheet may be pickled.

Next, the hot-rolled sheet is cold-rolled to manufacture a cold-rolled sheet. The cold-rolling is finally performed to a thickness of 0.1 mm to 0.3 mm. As necessary, the cold-rolling may be performed once, or two or more times with intermediate annealing therebetween. In this case, a temperature of the intermediate annealing may be 850 to 1150 °C.

Next, the cold-rolled sheet is finally annealed. In the process of annealing the cold-rolled sheet, the annealing temperature is not largely limited as long as it is a temperature that is generally applied to the non-oriented electrical steel sheet. Since the iron loss of the non-oriented electrical steel sheet is closely related to the grain size, it is suitable when it is 700 to 1050 °C. In the final annealing process, the average grain size may be 50 to 100 $\mu$m, and all (that is, 99 % or more) of the processed structure formed in the cold rolling that is the previous step thereof may be recrystallized.

The final annealing may be performed for 50 to 90 seconds in a non-oxidizing atmosphere. The non-oxidizing atmosphere may be an atmosphere including 5 vol% or more of $H_2$ and having a dew point of 0 °C or less.

Next, the final annealed cold-rolled sheet is cooled. After the cold-rolled sheet is finally cooled to 100 °C or less, an insulating film may be formed.

In the final annealing process, in the process of being cooled at 700 °C or less, oxygen in the atmosphere penetrates to form the oxide layer 10. In this case, by adjusting the exposure time to the atmosphere containing oxygen, it is possible to adjust the thickness of the above-described oxide layer 10. At less than 300 °C, the oxygen penetration into the steel sheet is difficult, and the exposure time at this time may not affect the thickness of the oxide layer 10.

The exposure time may be 5 to 20 seconds. When the exposure time is too short, the oxide layer 10 is formed thin, and when the exposure time is too long, the oxide layer 10 is formed thick. Specifically, it may be 10 to 17 seconds.

The atmosphere may be an oxidizing atmosphere with a dew point of greater than 0 °C.

Hereinafter, the present invention will be described in more detail through examples. However, the examples are only for illustrating the present invention, and the present invention is not limited thereto.

**Example**

A steel ingot including amounts of Table 1 and Table 2 and the balance of Fe and inevitable impurities were manufactured by vacuum melting in a laboratory. This was reheated at 1150 °C and hot-rolled at a finishing temperature of 880 °C to manufacture a hot-rolled sheet with a thickness of 2.0 mm. The hot-rolled sheet was annealed at 1030 °C for 100 seconds, and then cold-rolled to become respective thicknesses as shown in Table 3. This was final-recrystallization-annealed in an atmosphere of 80 vol% of $N_2$ and 20 vol% of $H_2$ for about 80 seconds at 1000 °C. Thereafter, when it is cooled from 700 °C to 300 °C, the exposure time to an atmosphere having a dew point of more than 0 °C was adjusted as shown in Table 3 below.

Table 3 below shows the grain size, the oxide layer thickness, the Al content of the oxide layer, and the AlN distribution with a diameter of 100 nm or less at a depth of 20 $\mu$m from the surface, for each specimen.

For the grain size, a cross-section in the rolling vertical direction of the specimen was polished and then etched, and a sufficient area was photographed with an optical microscope so that 1500 or more grains were included, and it was calculated as (measured area ÷ number of grains)^0.5.

Regarding the magnetic characteristics such as the magnetic flux density and the iron loss, for each specimen, the specimen of 60 mm (width) × 60 mm (length) × 5 (number of pieces) was incised and was measured in the rolling direction and the vertical rolling direction with a single sheet tester to find an average value. In this case, $W_{10/400}$ is iron loss when a magnetic flux density of 1.0 T is induced at a frequency of 400 Hz, and B50 is a magnetic flux density induced in a magnetic field of 5000 A/m.

The oxide layer thickness is an average value obtained by processing the specimen with FIB to have a smooth cross-section and measuring the thickness of the oxide layer at 10 or more points by imaging it at high TEM magnification. The Al content of the oxide layer means an Al content expressed in wt% when the components of the oxide layer are measured by using the TEM-EDS method. The AIN of 100 nm or less, when the precipitates were observed by TEM, indicated whether AIN precipitates having a diameter of 100 nm or less were present in the region from the surface layer to a depth of 20 μm.

(Table 1)

| Specimen number | Si (%) | Al (%) | Mn (%) | C (ppm) | N (ppm) | S (ppm) | Ti (ppm) | Cu (ppm) |
|---|---|---|---|---|---|---|---|---|
| A1 | 3 | 1 | 0.41 | 20 | 65 | 28 | 27 | 80 |
| A2 | 3 | 1 | 0.39 | 27 | 17 | 72 | 26 | 55 |
| A3 | 3 | 1 | 0.4 | 25 | 20 | 21 | 22 | 79 |
| A4 | 3 | 1 | 0.41 | 15 | 26 | 16 | 16 | 62 |
| B1 | 3.2 | 0.6 | 0.49 | 27 | 11 | 15 | 26 | 53 |
| B2 | 3.2 | 0.6 | 0.51 | 25 | 16 | 17 | 61 | 68 |
| B3 | 3.2 | 0.6 | 0.5 | 15 | 15 | 12 | 22 | 82 |
| B4 | 3.2 | 0.6 | 0.5 | 21 | 17 | 21 | 24 | 54 |
| C1 | 3.4 | 0.8 | 0.21 | 21 | 23 | 19 | 22 | 61 |
| C2 | 3.4 | 0.8 | 0.2 | 34 | 22 | 23 | 27 | 121 |
| C3 | 3.4 | 0.8 | 0.21 | 17 | 20 | 19 | 24 | 74 |
| C4 | 3.4 | 0.8 | 0.21 | 34 | 26 | 13 | 21 | 76 |
| D1 | 3.5 | 1.2 | 0.11 | 18 | 24 | 9 | 18 | 55 |
| D2 | 3.5 | 0.5 | 0.03 | 34 | 18 | 7 | 20 | 80 |
| D3 | 3.5 | 0.5 | 0.09 | 30 | 19 | 9 | 12 | 64 |
| D4 | 3.5 | 0.5 | 0.09 | 27 | 16 | 9 | 19 | 84 |
| E1 | 3.3 | 0.7 | 0.62 | 29 | 19 | 19 | 14 | 54 |
| E2 | 3.3 | 0.4 | 0.3 | 16 | 14 | 15 | 22 | 66 |
| E3 | 3.3 | 0.7 | 0.29 | 23 | 19 | 20 | 16 | 53 |
| E4 | 3.3 | 0.7 | 0.3 | 34 | 16 | 11 | 26 | 63 |

(Table 2)

| Specimen number | V (ppm) | Nb (ppm) | Cr (ppm) | Ni (ppm) | Sn (ppm) | Sb (ppm) |
|---|---|---|---|---|---|---|
| A1 | 27 | 17 | 274 | 293 | 746 | 347 |
| A2 | 15 | 22 | 354 | 368 | 520 | 502 |
| A3 | 17 | 19 | 218 | 356 | 252 | 276 |
| A4 | 19 | 16 | 308 | 334 | 436 | 591 |
| B1 | 18 | 18 | 214 | 148 | 491 | 670 |
| B2 | 28 | 23 | 295 | 410 | 153 | 718 |

(continued)

| Specimen number | V (ppm) | Nb (ppm) | Cr (ppm) | Ni (ppm) | Sn (ppm) | Sb (ppm) |
|---|---|---|---|---|---|---|
| B3 | 25 | 26 | 107 | 419 | 676 | 590 |
| B4 | 25 | 12 | 303 | 264 | 605 | 377 |
| C1 | 20 | 29 | 262 | 399 | 565 | 557 |
| C2 | 23 | 13 | 406 | 382 | 534 | 658 |
| C3 | 12 | 18 | 322 | 407 | 522 | 193 |
| C4 | 14 | 18 | 405 | 371 | 388 | 157 |
| D1 | 14 | 15 | 212 | 277 | 524 | 495 |
| D2 | 23 | 14 | 225 | 237 | 769 | 235 |
| D3 | 19 | 29 | 330 | 368 | 752 | 573 |
| D4 | 19 | 12 | 187 | 349 | 467 | 433 |
| E1 | 19 | 23 | 229 | 175 | 381 | 283 |
| E2 | 17 | 17 | 256 | 273 | 379 | 524 |
| E3 | 13 | 16 | 185 | 414 | 744 | 690 |
| E4 | 18 | 10 | 164 | 338 | 307 | 432 |

(Table 3)

| Specimen number | Thickness [mm] | Exposure time [sec] | Grain size [μm] | Oxide layer thickness [nm] | Al content of oxide layer [%] | AlN [pcs/mm²] | W10/400 [W/kg] | B50 [T] | Remarks |
|---|---|---|---|---|---|---|---|---|---|
| A1 | 0.15 | 12 | 65 | 20 | 55 | 3.4 | 10.1 | 1.63 | Comparative example |
| A2 | | 12 | 64 | 5 | 56 | 4.1 | 10 | 1.62 | Comparative example |
| A3 | | 12 | 73 | 25 | 55 | 0.03 | 9.2 | 1.65 | Comparative example |
| A4 | | 12 | 75 | 20 | 54 | 0.02 | 9.3 | 1.65 | Comparative example |
| B1 | 0.2 | 30 | 113 | 60 | 56 | 0.05 | 11.6 | 1.63 | Comparative example |
| B2 | | 15 | 78 | 40 | 52 | 1.4 | 11.4 | 1.64 | Comparative example |
| B3 | | 15 | 93 | 40 | 54 | 0.03 | 10.1 | 1.66 | Inventive example |
| B4 | | 15 | 94 | 30 | 53 | 0.04 | 9.9 | 1.66 | Inventive example |
| C1 | 0.25 | 2 | 42 | 5 | 51 | 0.04 | 12.4 | 1.65 | Comparative example |
| C2 | | Non-oxidation Atmosphere Cooling | 63 | 5 | 54 | 2.7 | 12.6 | 1.64 | Comparative example |
| C3 | | 10 | 61 | 20 | 51 | 0.02 | 11.2 | 1.67 | Inventive example |
| C4 | | 10 | 65 | 20 | 52 | 0.04 | 11.1 | 1.67 | Inventive example |
| D1 | 0.27 | 13 | 80 | 70 | 52 | 4.5 | 13 | 1.65 | Comparative example |
| D2 | | 13 | 73 | 30 | 52 | 3.6 | 13.1 | 1.66 | Comparative example |
| D3 | | 13 | 81 | 20 | 54 | 0.03 | 11.9 | 1.68 | Inventive example |
| D4 | | 13 | 83 | 30 | 55 | 0.03 | 12 | 1.68 | Inventive example |

(continued)

| Specimen number | Thickness [mm] | Exposure time [sec] | Grain size [μm] | Oxide layer thickness [nm] | Al content of oxide layer [%] | AlN [pcs/mm²] | W 10/400 [W/kg] | B50 [T] | Remarks |
|---|---|---|---|---|---|---|---|---|---|
| E1 | 0.3 | 17 | 74 | 30 | 54 | 4.2 | 14.3 | 1.65 | Comparative example |
| E2 | | 17 | 69 | 30 | 52 | 5.7 | 14.4 | 1.66 | Comparative example |
| E3 | | 17 | 83 | 30 | 56 | 0.04 | 13.2 | 1.68 | Inventive example |
| E4 | | 17 | 87 | 30 | 53 | 0.03 | 13.2 | 1.68 | Inventive example |

As shown in Table 1 to Table 3, in the case of A3, A4, B3, B4, C3, C4, D3, D4, E3, and E4, both the component content and manufacturing method satisfied the range of the present invention, so that the grain size, the thickness and Al content of the oxide layer, and the AIN distribution of 100 nm or less in the surface layer were well formed, and the high frequency magnetism was excellent.

On the other hand, in the case of A1, A2, B2, and C2, the contents of N, S, Ti, and Cu exceeded the range of the present invention, so that AIN of 100 nm or less was excessively formed in the surface layer, and thus no excellent high frequency magnetism could be secured.

In the case of B1 and C1, the oxide layer was formed thickly or thinly because the exposure time to the oxidizing atmosphere was long or short. Therefore, it can be confirmed that the high frequency magnetism is relatively inferior.

When C2 was cooled after annealing, it was cooled in 15 % of $H_2$ that is a non-oxidizing atmosphere from -20 °C to 300 °C of a dew point. Therefore, it can be confirmed that the high frequency magnetism is relatively inferior because the oxide layer is not formed.

In the case of D1, D2, E1, and E2, the contents of Al and Mn were less than or exceeded the range of the present invention, so that fine AIN was formed in the surface layer or an excessively thick oxide layer was formed in the surface layer, resulting in poor high frequency magnetism.

The present invention may be embodied in many different forms, and should not be construed as being limited to the disclosed embodiments. In addition, it will be understood by those skilled in the art that various changes in form and details may be made thereto without departing from the technical spirit and essential features of the present invention. Therefore, it is to be understood that the above-described embodiments are for illustrative purposes only, and the scope of the present invention is not limited thereto.

[Description of symbols]

100: non-oriented electrical steel sheet
10: oxide layer

**Claims**

1. A non-oriented electrical steel sheet includes, in wt%, Si: 1.5 to 4.0 %, Al: 0.5 to 1.5 %, Mn: 0.05 to 0.55 %, C: 0.005 % or less, Ti: 0.004 % or less (excluding 0 %), N: 0.005 % or less (excluding 0 %), S: 0.005 % or less (excluding 0 %), and Cu: 0.01% or less (excluding 0 %), and the balance of Fe and inevitable impurities;

    satisfies Formula 1 and Formula 2 below; and
    includes an oxide layer in an inner direction from a surface thereof,
    wherein the oxide layer includes 50 wt% or more of Al; and
    a thickness of the oxide layer is 10 to 50 nm:

$$[\text{Formula 1}]$$

$$[N] \leq 0.005 \times ([Al]+[Ti])$$

$$[\text{Formula 2}]$$

$$[S] \leq 0.01 \times ([Mn]+[Cu])$$

    (in Formula 1 and Formula 2, [N], [Al], [Ti], [S], [Mn], and [Cu] represent a content (wt%) of N, Al, Ti, S, Mn, and Cu, respectively).

2. The non-oriented electrical steel sheet of claim 1, wherein one or more of Nb and V are further included in an amount of 0.004 wt% or less, respectively.

3. The non-oriented electrical steel sheet of claim 1, wherein one or more of Cr and Ni are further included in an amount of 0.05 wt% or less, respectively.

4. The non-oriented electrical steel sheet of claim 1, wherein
   one or more of Sn and Sb are further included in an amount of 0.1 wt% or less, respectively.

5. The non-oriented electrical steel sheet of claim 1, further comprising
   one or more of P: 0.02 wt% or less, B: 0.002 wt% or less, Mg: 0.005 wt% or less, and Zr: 0.005 wt% or less.

6. The non-oriented electrical steel sheet of claim 1, wherein
   the number of AlN precipitates having a diameter of 100 nm or less in a cross-section from a surface to a depth of 20 $\mu$m is 0.1 pieces/mm$^2$ or less.

7. The non-oriented electrical steel sheet of claim 1, wherein
   an average grain size is 50 to 100 $\mu$m.

8. A manufacturing method of a non-oriented electrical steel sheet, comprising:

   hot-rolling a slab including, in wt%, Si: 1.5 to 4.0 %, Al: 0.5 to 1.5 %, Mn: 0.05 to 0.55 %, C: 0.005 % or less, Ti: 0.004 % or less (excluding 0 %), N: 0.005 % or less (excluding 0 %), S: 0.005 % or less (excluding 0 %), and Cu: 0.01% or less (excluding 0 %), and the balance of Fe and inevitable impurities, and satisfying Formula 1 and Formula 2 below to manufacture a hot-rolled sheet;
   cold-rolling the hot-rolled sheet to manufacture a cold-rolled sheet;
   final-annealing the cold-rolled sheet; and
   cooling the final-annealed cold-rolled sheet,
   wherein in the cooling the final-annealed cold-rolled sheet, an exposure time to an atmosphere having a dew point exceeding 0 °C at a temperature of 700 °C or less is 5 to 20 seconds:

   [Formula 1]

   $$[N] \leq 0.005 \times ([Al]+[Ti])$$

   [Formula 2]

   $$[S] \leq 0.01 \times ([Mn]+[Cu])$$

   (in Formula 1 and Formula 2, [N], [Al], [Ti], [S], [Mn], and [Cu] represent a content (wt%) of N, Al, Ti, S, Mn, and Cu, respectively).

9. The manufacturing method of the non-oriented electrical steel sheet of claim 8, further comprising
   heating the slab at a temperature of 1200 °C or less before the manufacturing of the hot-rolled sheet.

10. The manufacturing method of the non-oriented electrical steel sheet of claim 8, wherein
    in the hot-rolling, a finish rolling temperature is 800 °C or higher.

11. The manufacturing method of the non-oriented electrical steel sheet of claim 8, further comprising
    annealing the hot-rolled sheet in a range of 850 to 1150 °C after the hot-rolling.

12. The manufacturing method of the non-oriented electrical steel sheet of claim 8, wherein the final-annealing is performed in a non-oxidizing atmosphere at a temperature of 700 to 1050 °C for 50 to 90 seconds.

13. The manufacturing method of the non-oriented electrical steel sheet of claim 12, wherein
    the non-oxidizing atmosphere is an atmosphere including 5 vol% or more of H$_2$ and having a dew point of 0 °C or less.

FIG. 1

<u>100</u>

10